# EUROPEAN PATENT APPLICATION

(11) **EP 4 761 391 A1**
(43) Date of publication of application: **17.06.2026**
(21) Application number: 23948133.6
(22) Date of filing: 10.08.2023
(51) Int. Cl.: H04W 56/00

(54) **INFORMATION PROCESSING METHOD, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/112404
(87) International publication number: WO 2025/030563

(57) **Abstract**

Provided in the embodiments of the present disclosure are an information processing method, and a communication device, a communication system and a storage medium. The method comprises: determining second information on the basis of first information, wherein the first information is used for determining the validity duration of position information of a terminal, and the second information is used for maintaining synchronization between the terminal and a network device in a non-terrestrial network (NTN) when the position information of the terminal exceeds the validity duration. The technical solution provided in the embodiments of the present disclosure is conducive to maintaining uplink synchronization between a terminal and a network device in an NTN when position information of the terminal exceeds the validity duration, thereby avoiding interference with uplink transmission between different terminals.

## Description

### FIELD

The disclosure relates to the field of communication technologies, and in particular to an information processing method, a communication device, a communication system and a storage medium.

### BACKGROUND

In order to enable a terminal to perform an uplink synchronization, a network device may indicate a timing advance (TA) value to the terminal, and the terminal obtains the uplink synchronization based on the TA value indicated by the network device.

In a non-terrestrial network (NTN), a transmission delay between the network device of the NTN and the terminal is caused by a relative movement between the network device of the NTN and the terminal, and the transmission delay may change rapidly. In order to maintain the uplink synchronization, the terminal needs to accurately know its own location information to perform an uplink synchronization compensation. However, when transmitting a service with a long transmission duration, if the location information of the terminal expires, the terminal will enter an idle state (IDLE) and reacquire location information, resulting in an increased transmission delay and a higher power consumption.

### SUMMARY

With a development of communication technologies, in a case that a validity duration of location information of a terminal expires, an uplink synchronization between the terminal and a network device of a non-terrestrial network (NTN) is maintained to effectively reduce a transmission delay.

The embodiments of the present disclosure provide an information processing method, a communication device and a storage medium.

In a first aspect, the embodiments of the present disclosure provide an information processing method, including:
determining second information based on first information, where the first information is used to determine a validity duration of location information of a terminal, and the second information is used to maintain a synchronization between the terminal and a network device of a non-terrestrial network (NTN) in a case that the validity duration of the location information of the terminal expires.

In a second aspect, the embodiments of the present disclosure provide an information processing method, including:
sending, by a network device of a non-terrestrial network (NTN), third information to a terminal, where the third information is used for the terminal to determine second information, and the second information is used to maintain a synchronization between the terminal and the network device of the NTN in a case that a validity duration of location information of the terminal expires.

In a third aspect, the embodiments of the present disclosure provide an information processing method, including:
sending, by a network device of a non-terrestrial network (NTN), third information to a terminal, where the third information is used for the terminal to determine second information;
determining, by the terminal, the second information, based on first information and the third information, where the first information is used to determine a validity duration of location information of the terminal, and the second information is used to maintain a synchronization between the terminal and the network device of the NTN in a case that the validity duration of the location information of the terminal expires.

In a fourth aspect, the embodiments of the present disclosure provide a terminal, including:
a determining module, configured to determine second information based on first information, where the first information is used to determine a validity duration of location information of a terminal, and the second information is used to maintain a synchronization between the terminal and a network device of a non-terrestrial network (NTN) in a case that the validity duration of the location information of the terminal expires.

In a fifth aspect, the embodiments of the present disclosure provide a network device, including:
a sending module, configured to send third information to a terminal, where the third information is used for the terminal to determine second information, and the second information is used to maintain a synchronization between the terminal and a network device of a non-terrestrial network (NTN) in a case that a validity duration of location information of the terminal expires.

In a sixth aspect, the embodiments of the present disclosure provide a communication system including a terminal and a network device, where the terminal is configured to implement the information processing method according to the first aspect, and the network device is configured to implement the information processing method according to the second aspect.

In a seventh aspect, the embodiments of the present disclosure provide a communication device, including:
one or more processors;
where the one or more processors are configured to call instructions to cause the communication device to perform the information processing method according to the first aspect or the information processing method according to the second aspect.

In an eighth aspect, the embodiments of the present disclosure provide a storage medium for storing instructions that, when executed on a communication device, cause the communication device to implement the information processing method according to the first aspect or the information processing method according to the second aspect.

The technical solution provided by the embodiments of the present disclosure is beneficial for maintaining the uplink synchronization between the terminal and the network device of the NTN in the case that the validity duration of the location information of the terminal expires, thereby avoiding an interference in an uplink transmission between different terminals.

It should be understood that the foregoing general descriptions and the following detailed descriptions are merely exemplary and explanatory and do not limit the embodiments of the present disclosure.

### BRIEF DESCRIPTION OF THE DRAWINGS

The accompanying drawings, which are incorporated in and constitute a part of the specification, illustrate embodiments consistent with the present invention and, together with the specification, serve to explain the principles of the embodiments of the present invention.
FIG. 1a is a diagram schematic illustrating an architecture of a communication system according to an exemplary embodiment.
FIG. 1b is a schematic diagram illustrating a scenario of an uplink and downlink timing alignment at a base station side according to an exemplary embodiment.
FIG. 1c is a schematic diagram illustrating a scenario of an uplink and downlink timing misalignment at a base station side according to an exemplary embodiment.
FIG. 2a is an interaction schematic diagram illustrating an information processing method according to an exemplary embodiment.
FIG. 2b is an interaction schematic diagram illustrating an information processing method according to an exemplary embodiment.
FIG. 3a is a flow chart illustrating an information processing method according to an exemplary embodiment.
FIG. 3b is a flow chart illustrating an information processing method according to an exemplary embodiment.
FIG. 3c is a flow chart illustrating an information processing method according to an exemplary embodiment.
FIG. 4a is a flow chart illustrating an information processing method according to an exemplary embodiment.
FIG. 4b is a flow chart illustrating an information processing method according to an exemplary embodiment.
FIG. 5 is an interaction schematic diagram illustrating an information processing method according to an exemplary embodiment.
FIG. 6a is a schematic diagram illustrating an adjustment of a timing advance (TA) value of an uplink transmission of a terminal based on a TA drift rate according to an exemplary embodiment.
FIG. 6b is a schematic diagram illustrating an adjustment of a timing advance (TA) value of an uplink transmission of a terminal based on a TA adjustment amount indicated by a timing advance command (TAC) according to an exemplary embodiment.
FIG. 7a is a block diagram illustrating a terminal according to an exemplary embodiment.
FIG. 7b is a block diagram illustrating a network device according to an exemplary embodiment.
FIG. 8a is a block diagram illustrating a communication device 8100 according to an exemplary embodiment.
FIG. 8b is a block diagram illustrating a chip 8200 according to an exemplary embodiment.

### DETAILED DESCRIPTION

The embodiments of the present disclosure provide an information processing method and apparatus, a communication device, a communication system and a storage medium.

In a first aspect, the embodiments of the present disclosure provide an information processing method, including: determining second information based on first information, where the first information is used to determine a validity duration of location information of a terminal, and the second information is used to maintain a synchronization between the terminal and a network device of a non-terrestrial network (NTN) in a case that the validity duration of the location information of the terminal expires.

In the above embodiments, in the case that the validity duration of the location information of the terminal expires, the terminal determines the second information and uses the second information to maintain an uplink synchronization between the terminal and the network device of the NTN. In this way, while maintaining the synchronization between the terminal and the network device of the NTN, an uplink transmission and/or a downlink transmission between the terminal and the network device of the NTN can still continue, thereby improving an accessibility of the terminal and improving a communication quality of the terminal in the NTN.

In combination with some embodiments of the first aspect, in some embodiments, the method further includes: receiving third information from the network device, where the third information is used for the terminal to determine the second information.

In the above embodiments, the terminal may determine the second information based on the third information sent by the network device, and then maintain the uplink synchronization between the terminal and the network device of NTN using the second information in the case that the validity duration of the location information of the terminal expires, thereby realizing a closed-loop synchronization adjustment and avoiding an interference in the uplink transmission between different terminals.

In combination with some embodiments of the first aspect, in some embodiments, the third information includes at least one of: a timing advance (TA) drift rate; or a timing advance adjustment amount.

In the above embodiments, the terminal adjusts a TA value of the uplink transmission of terminal, based on the TA drift rate and/or the timing advance adjustment amount indicated by the third information, thereby reducing the transmission delay between the terminal and the network device, thereby maintaining the uplink synchronization between the terminal and the network device of the NTN in the case that the validity duration of the location information of the terminal expires and avoiding the interference in the uplink transmission between the different terminals.

In combination with some embodiments of the first aspect, in some embodiments, the third information is carried in a timing advance command (TAC).

In the above embodiments, an existing TAC may be directly reused to carry the third information, thereby effectively reducing signaling overhead.

In combination with some embodiments of the first aspect, in some embodiments, the method further includes: receiving fourth information, where the fourth information indicates one or more candidate TA drift rates configured for the terminal, and the TAC is used to determine, from the one or more candidate TA drift rates, a TA drift rate included in the second information.

In the above embodiments, the terminal receives the fourth information, determines, based on the fourth information, one or more candidate TA drift rates pre-configured by the network device, and determines, from one or more candidate TA drift rates, the TA drift rate included in the second information, based on the TAC sent by the network device, thereby reducing a message length of the TAC and reducing communication overhead.

In combination with some embodiments of the first aspect, in some embodiments, determining the second information based on the first information includes: determining fifth information, where the fifth information is used to determine a second location of the terminal; and determining the TA drift rate included in the second information based on a first location determined from the first information and the second location.

In the above embodiments, in the case that the validity duration of the location information of the terminal expires, the terminal may determine a second location where the terminal is currently located by itself and estimate a transmission delay between the terminal and the network device based on the first location determined from the first information and the second location to determine the TA drift rate. In the case that the validity duration of the location information of the terminal expires, the uplink synchronization between the terminal and the network device of the NTN is maintained to implement an open-loop synchronization adjustment and avoid the interference in the uplink transmission between the different terminals.

In combination with some embodiments of the first aspect, in some embodiments, determining the fifth information includes: obtaining sixth information, where the sixth information is used to determine a movement status of the network device of the NTN; and determining the fifth information based on the sixth information.

In the above embodiments, in the case that the validity duration of the location information of the terminal expires, the terminal may determine a current location of the network device of the NTN by obtaining the sixth information used to determine the movement status of the network device of the NTN, so as to estimate the second location where the terminal is currently located and determine the TA drift rate based on the second location by itself.

In combination with some embodiments of the first aspect, in some embodiments, the method further includes: in a case that the second information is a TA drift rate, determining a TA adjustment amount for a time unit based on the TA drift rate; and adjusting a TA value of a corresponding time unit based on the TA adjustment amount.

In the above embodiments, after determining the second information, if the second information is the TA drift rate, the TA adjustment amount for a time unit of the uplink transmission may be determined based on the TA drift rate, and the TA value corresponding to the corresponding time unit is adjusted based on the TA adjustment amount. Thereby, in the case that the validity duration of the location information of the terminal expires, a more accurate TA value for the uplink transmission is obtained, the transmission delay is effectively reduced, and the uplink synchronization between the terminal and the network device of the NTN is maintained.

In combination with some embodiments of the first aspect, in some embodiments, the method further includes: in a case that the second information is a TA adjustment amount, adjusting a TA value of a corresponding time unit based on the TA adjustment amount.

In the above embodiments, after determining the second information, if the second information is the TA adjustment amount, the TA value corresponding to the corresponding time unit is adjusted based on the TA adjustment amount. Thereby, in the case that the validity duration of the location information of the terminal expires, the more accurate TA value for the uplink transmission is obtained, the transmission delay is effectively reduced, and the uplink synchronization between the terminal and the network device of the NTN is maintained.

In a second aspect, the embodiments of the present disclosure provide an information processing method, including: sending, by a network device of a non-terrestrial network (NTN), third information to a terminal, where the third information is used for the terminal to determine second information, and the second information is used to maintain a synchronization between the terminal and the network device of the NTN in a case that a validity duration of location information of the terminal expires.

In the above embodiments, the network device sends the third information to the terminal, so that the terminal may determine the second information based on the third information and then maintain an uplink synchronization between the terminal and the network device of NTN using the second information in the case that the validity duration of the location information of the terminal expires, thereby realizing a closed-loop synchronization adjustment and avoiding an interference in an uplink transmission between different terminals.

In a third aspect, the embodiments of the present disclosure provide an information processing method, including: sending, by a network device of a non-terrestrial network (NTN), third information to a terminal, where the third information is used for the terminal to determine second information; and determining, by the terminal, the second information, based on first information and the third information, where the first information is used to determine a validity duration of location information of the terminal, and the second information is used to maintain a synchronization between the terminal and the network device of the NTN in a case that the validity duration of the location information of the terminal expires.

In a fourth aspect, the embodiments of the present disclosure provide a terminal, including: a determining module, configured to determine second information based on first information, where the first information is used to determine a validity duration of location information of a terminal, and the second information is used to maintain a synchronization between the terminal and a network device of a non-terrestrial network (NTN) in a case that the validity duration of the location information of the terminal expires.

In a fifth aspect, the embodiments of the present disclosure provide a network device, including: a sending module, configured to send third information to a terminal, where the third information is used for the terminal to determine second information, and the second information is used to maintain a synchronization between the terminal and a network device of a non-terrestrial network (NTN) in a case that a validity duration of location information of the terminal expires.

In a sixth aspect, the embodiments of the present disclosure provide a communication system including a terminal and a network device, where the terminal is configured to implement the information processing method according to the first aspect, and the network device is configured to implement the information processing method according to the second aspect.

In a seventh aspect, the embodiments of the present disclosure provide a communication device, including: one or more processors; where the one or more processors are configured to call instructions to cause the communication device to perform the information processing method according to the first aspect or the information processing method according to the second aspect.

In an eighth aspect, the embodiments of the present disclosure provide a storage medium for storing instructions that, when executed on a communication device, cause the communication device to implement the information processing method according to the first aspect or the information processing method according to the second aspect.

In a ninth aspect, the embodiments of the present disclosure provide a program product, when executed on a communication device, cause the communication device to perform the information processing method described in the optional implementations of the first aspect or the second aspect.

In a tenth aspect, the embodiments of the present disclosure provide a computer program, when executed on a computer, cause the computer to perform the information processing method described in the optional implementations of the first aspect or the second aspect.

It can be understood that the aforementioned terminal, network device, communication device, communication system, storage medium, program product and computer program are all used to perform the methods provided in the embodiments of the present disclosure. Therefore, beneficial effects they may achieve may refer to those described in the corresponding methods, and will not be repeated here.

The embodiments of the present disclosure provide an information processing method, a communication device, a communication system and a storage medium. In some embodiments, a term "an information processing method" may be used interchangeably with terms such as "an information indicating method" or "an information transmitting method". A term "an information indicating apparatus" may be used interchangeably with terms such as "an information processing apparatus" or "an information transmitting apparatus" or the like. A term "a communication system" may be used interchangeably with terms such as "an information processing system" or the like.

The embodiments of the present disclosure are not exhaustive, and are presented only as illustrations of some embodiments, and are not intended to impose specific limitations on the scope of protection of the present disclosure. In the absence of contradiction, each step in a certain embodiment may be implemented as an independent embodiment, and the steps may be combined arbitrarily. For example, a solution after removing some steps in a certain embodiment may also be implemented as an independent embodiment, and an order of the steps in a certain embodiment may be exchanged arbitrarily. In addition, an optional implementation in a certain embodiment may be combined arbitrarily. Moreover, the embodiments may be combined arbitrarily, for example, some or all of the steps of different embodiments may be combined arbitrarily, and a certain embodiment may be combined arbitrarily with an optional implementation of other embodiments.

In the embodiments of the present disclosure, unless otherwise specified or there is a logical conflict, terms and/or descriptions are consistent across embodiments and may be referenced to each other, and technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in a singular form, such as "a", "an", "the", "the above-mentioned", "the said", "the aforementioned", "this" or the like, may denote "one and only one", or may also denote "one or more", "at least one...", and the like. For example, where an article such as "a", "an", or "the" is used in translation, a noun following the article may be interpreted as the singular form or a plural form.

In the embodiments of the present disclosure, a term "multiple" means two or more.

In some embodiments, terms such as "at least one of ...", "one or more", "a plurality of" and "multiple" and the like may be used interchangeably.

In some embodiments, expressions such as "at least one of A and B", "A and/or B", "A in one case, B in another case", "one case being A and another case being B", etc., may, depending on circumstances, include the following technical solutions: in some embodiments, A (A is performed independently of B); in some embodiments, B (B is performed independently of A); in some embodiments, selecting to perform either A or B (A and B are selectively performed); in some embodiments, A and B (both A and B are performed). The same applies where there are more branches such as A, B, C, and the like.

In some embodiments, expressions such as "A or B" may, depending on circumstances, include the following technical solutions: in some embodiments, A (A is performed independently of B); in some embodiments, B (B is performed independently of A); in some embodiments, selecting to perform either A or B (A and B are selectively performed). The same applies where there are more branches such as A, B, C, and the like.

Prefixes such as "first" and "second" in the embodiments of the present disclosure are only used to distinguish different description objects, and do not constitute restrictions on a position, order, priority, quantity or content of the description objects. Statement of the description object refers to descriptions in the context of the claims or the embodiments, and should not constitute unnecessary restrictions due to the use of the prefixes. For example, if the description object is a "field", an ordinal number in front of the "field" in a "first field" and the a "second field" does not limit the position or order between the "field", and the "first" and "second" do not limit whether the "field" they modified are in the same message, nor do they limit the order of the "first field" and the "second field". As another example, if the description object is a "level", an ordinal number in front of the "level" in the "first level" and the "second level" does not limit the priority between the "levels". As another example, a number of the description objects is not limited by the ordinal number, and may be one or more. Taking a "first apparatus" as an example, a number of "apparatus" may be one or more. In addition, objects modified by different prefixes may be the same or different. For example, if the description object is "apparatus", the "first apparatus" and a "second device" may be the same apparatus or different apparatus, and their types may be the same or different. As another example, if the description object is "information", "first information" and "second information" may be same information or different information, and their contents may be the same or different.

In some embodiments, "include A", "contain A", "used to indicate A", and "carry A" may be interpreted as directly carrying A or indirectly indicating A.

In some embodiments, terms such as "determining that ...", "in a case of ...", "at a time of ...", "when ...", "if ...", "in case ..." etc. may be used interchangeably.

In some embodiments, terms such as "greater than", "greater than or equal to", "not less than", "more than", "more than or equal to", "not less than", "higher than", "higher than or equal to", "not lower than", and "above" may be used interchangeably, and terms such as "less than", "less than or equal to", "not greater than", "less than", "less than or equal to", "no more than", "lower than", "lower than or equal to", "not higher than" and "below" may be used interchangeably.

In some embodiments, an apparatus may be interpreted as physical or virtual, and its name is not limited to a name recorded in the embodiments. Terms such as "apparatus", "equipment", "device", "circuit", "network element", "node", "function", "unit", "section", "system", "network", "chip", "chip system", "entity", "subject" and the like may be used interchangeably.

In some embodiments, "network" may be interpreted as an apparatus included in a network, such as an access network device, a core network device, etc.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device" , "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, core network device, or network device may be replaced by the terminal. For example, various embodiments of the present disclosure may also be applied to a structure in which a communication between the access network device, core network device, or network device and the terminal is replaced by a communication between multiple terminals (e.g., device-to-device (D2D), vehicle-to-everything (V2X), etc.). In such cases, a structure in which the terminal has all or part of functions of the access network device may also be adopted. Furthermore, terms such as "uplink" and "downlink" may be replaced by terms corresponding to a communication between terminals (e.g., "side"). For example, an uplink channel, downlink channel and the like may be replaced by a side channel. An uplink and downlink, etc. may be replaced by sidelink.

In some embodiments, the terminal may be replaced by the access network device, core network device, or network device. In such cases, a structure in which the access network device, core network device, or network device has all or part of the functions of the terminal may also be adopted.

In some embodiments, an acquisition of data and information, etc. may comply with laws and regulations of a country where the data and information are obtained.

In some embodiments, the data and information, etc. may be obtained after obtaining user's consent.

In addition, each element, each row, or each column in a table of the embodiments of the present disclosure may be implemented as an independent embodiment, and a combination of any elements, any rows, and any columns may also be implemented as an independent embodiment.

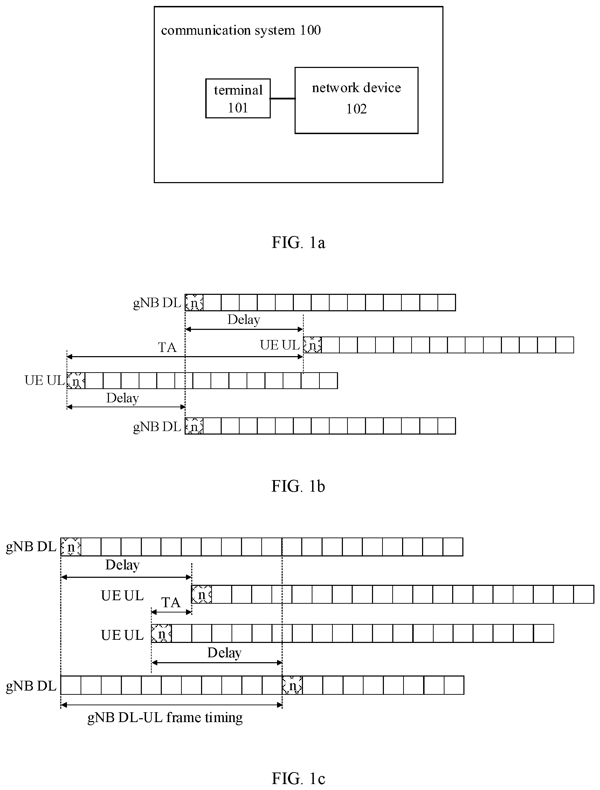

FIG. 1a is a schematic diagram illustrating an architecture of a communication system according to an exemplary embodiment.

As shown in FIG. 1a, a communication system 100 includes a terminal 101 and a network device 102.

In some embodiments, the terminal 101 includes, for example, but is not limited to, at least one of: a mobile phone, a wearable device, an internet of things (IoT) device, a vehicle with communication capabilities, a smart vehicle, a tablet (Pad), a computer with wireless transmission and reception capabilities, a virtual reality (VR) terminal device, an augmented reality (AR) terminal device, a wireless terminal device used in industrial control, a wireless terminal device used in self-driving, a wireless terminal device used in remote medical surgery, a wireless terminal device used in smart grid, a wireless terminal device used in transportation safety, a wireless terminal device used in smart city, or a wireless terminal device used in smart home.

In some embodiments, the network device 102 may include an access network device and/or a core network device.

In some embodiments, the access network device may be, for example, a node or device that accesses a terminal to a wireless network. The access network device may include at least one of: an evolved NodeB (eNB) in a 5G communication system, a next generation evolved NodeB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a Wi-Fi system, but is not limited thereto.

In some embodiments, technical solutions of the present disclosure may be applicable to an Open RAN architecture. In this case, interfaces between or within the access network devices involved in the embodiments of the present disclosure may correspond to internal interfaces of the Open RAN architecture. A procedure and information exchange between the internal interfaces may be implemented via software or programs.

In some embodiments, the access network device may be composed of a central unit (CU) and a distributed unit (DU). The CU may also be referred to as a control unit. An CU-DU architecture may be used to split a protocol layer of the access network device, with functions of some protocol layers being centrally controlled by the CU, and functions of part or all of the of the remaining protocol layers being distributed in the DU, and the DU being centrally controlled by the CU, but is not limited thereto.

In some embodiments, the core network device may be a single device including one or more network elements, or may be multiple devices or a device group, each including one or more network elements. The network element may be virtual or physical. The core network includes, for example, at least one of: an evolved packet core (EPC), a 5G core network (5GCN), or a next generation core (NGC).

It can be understood that the communication system described in the embodiments of the present disclosure is for the purpose of illustrating the technical solutions of the embodiments of the present disclosure more clearly, and does not constitute a limitation on the technical solutions proposed in the embodiments of the present disclosure. A person of ordinary skill in the art may recognize that with an evolution of a system architecture and emergence of a new service scenario, the technical solutions proposed in the embodiments of the present disclosure is also applicable to similar technical problems.

The following embodiments of the present disclosure may be applied to the communication system 100 shown in FIG. 1a, or part of entities, but are not limited thereto. The entities shown in FIG. 1a are examples, and the communication system may include all or part of the entities in FIG. 1a, or may include other entities other than FIG. 1a. A number and form of the entities are arbitrary. A connection relationship between the entities is an example. The entities may be connected or disconnected. A connection between the entities may be in any manner, which may be a direct connection or an indirect connection, and may be a wired connection or a wireless connection.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM^{®}), CDMA2000, ultra mobile broadband (UMB), IEEE 802.11 (Wi-Fi^{®}), IEEE 802.16 (WiMAX^{®}), IEEE 802.20, ultra-wideband (UWB), Bluetooth^{®}, public land mobile network (PLMN) network, device-to-device (D2D) system, machine-to-machine (M2M) system, internet of things (IoT) system, vehicle-to-everything (V2X), systems using other communication methods and next-generation systems based on them, etc. In addition, multiple systems may also be combined (for example, a combination of the LTE or the LTE-A and the 5G, etc.) for application.

In some embodiments, the emergence of new internet applications such as a new generation augmented reality (AR)/virtual reality (VR), vehicle-to-vehicle communication, etc. puts higher requirements for wireless communication technology, driving a continuous evolution of the wireless communication technology to meet needs of applications. At present, cellular mobile communication technology is in an evolution stage of a new generation of technology. An important feature of the new generation of technology is to support a flexible configuration of multiple service types. Since different service types have different requirements for wireless communication technology, for instance, an enhanced mobile broadband (eMBB) service type primarily emphasizes on a large bandwidth and high data rates, an ultra-reliable low-latency communication (URLLC) service type primarily emphasizes on a high reliability and low latency, and a massive machine type communication (mMTC) service type primarily emphasizes on a large number of connections. Therefore, a new generation wireless communication system requires a flexible and configurable design to support transmissions for multiple service types.

In a research on the wireless communication technology, a satellite communication is considered as an important aspect for the future development of the wireless communication. The satellite communication refers to a communication in which a satellite is used as a relay for a terrestrial radio communication device. A satellite communication system consists of a satellite segment and a terrestrial segment. Characteristics of the satellite communication include: a wide communication coverage, which means that a communication may be conducted between any two points as long as they are within a range covered by radio waves emitted by the satellite, and a high reliability as it is less susceptible to land disasters. As a complement to a current terrestrial cellular communication system, the satellite communication may offer the following benefits.

An extended coverage is achieved. For areas that cannot be covered by a current cellular communication system or are costly to cover, such as oceans, deserts, remote mountainous areas, etc., the satellite communication may be used to solve communication problems.

An emergency communication is achieved. In extreme situations such as disasters such as earthquakes, when a cellular communication infrastructure is unavailable, the satellite communication may be used to quickly establish a communication connection.

Industry applications are provided. For example, for a delay-sensitive service in a long-distance transmission, the satellite communication may be used to reduce a delay of a service transmission.

It can be foreseen that in future wireless communication systems, the satellite communication system and the terrestrial cellular communication system will progressively achieve deep integration and an intelligent connection of all things will be truly realized.

In some embodiments, in a satellite communication scenario, due to a long signal transmission distance between a transmitter and a receiver, a data transmission takes a long time period. For a transmission with an uplink-downlink relationship, parameters of K_{offset} are introduced in current standardization discussions to compensate for a transmission delay.

As shown in FIG. 1b and FIG. 1c, FIG. 1b is a schematic diagram illustrating a scenario of an uplink and downlink timing alignment at a base station side according to an exemplary embodiment, and FIG. 1c is a schematic diagram illustrating a scenario of an uplink and downlink timing misalignment at a base station side according to an exemplary embodiment.

K_{offset} may be applied in a variety of operations, such as: a physical uplink sharing channel (PUSCH) transmission scheduled by downlink control information (DCI), a transmission of hybrid automatic repeat request (HARQ) feedback information and a transmission of a control element (CE) of a media access control (MAC).

In some embodiments, a terminal needs to obtain location information to determine a timing compensation of an uplink transmission. The terminal may determine its own location information through a global navigation satellite system (GNSS) measurement module.

After the terminal obtains a GNSS measurement result, reliable time of GNSS may be reported to a base station through a GNSS validity duration. In some embodiments, when the GNSS validity duration of the terminal expires, the terminal enters an idle state.

A behavior that the terminal reacquires GNSS after entering the idle state will introduce a delay in a data transmission. After the GNSS validity duration expires, one possible approach to prevent the terminal from entering the IDLE state is maintaining an uplink synchronization of the terminal. After an existing GNSS available duration expires, the terminal may still perform the uplink transmission if certain conditions are met. However, it needs to be clarified how to perform the uplink synchronization of the terminal during this period.

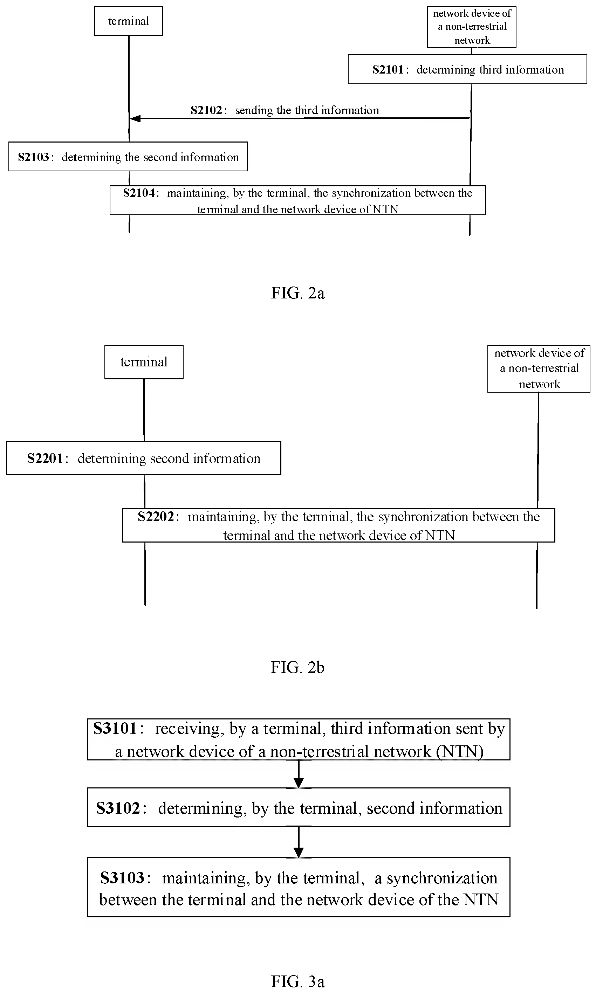

FIG. 2a is an interaction schematic diagram illustrating an information processing method according to an exemplary embodiment. As shown in FIG. 2a, the embodiments of the present disclosure relate to an information processing method, which is performed by a communication system 100, and the method includes the following steps.

In step 2101, a network device determines third information.

In some embodiments, the network device may be a network device of a non-terrestrial network (NTN), such as a satellite or a drone.

It should be noted that the NTN refers to a network not deployed on ground, which includes a satellite communication. The satellite communication refers to a communication in which a satellite is used as a relay node for a terrestrial radio communication device. A satellite communication system consists of a satellite segment and a terrestrial segment.

In some embodiments, the third information is used by a terminal to determine second information.

It should be noted that the terminal may be a terminal supporting the NTN.

In some embodiments, the third information may be uplink synchronization assistance information.

In some embodiments, the third information is used to assist the terminal in determining a timing advance (TA) value for an uplink transmission.

In some embodiments, the third information may include at least one of: a timing advance (TA) drift rate; or a timing advance adjustment amount.

In some embodiments, the TA drift rate is used to indicate an amount of change in TA per unit time.

It should be noted that due to a movement of the network device of the NTN and/or the terminal, a transmission delay between the terminal and the network device of the NTN changes rapidly. Before performing the uplink transmission, the terminal needs to determine a timing compensation for the uplink transmission based on the TA drift rate and/or the TA adjustment amount, so as to reduce the transmission delay between the terminal and the network device of the NTN and maintain an uplink synchronization.

In some embodiments, the second information is used to maintain a synchronization between the terminal and the network device of the NTN in a case that a validity duration of location information of the terminal expires.

In some embodiments, the second information is used for the terminal to perform the uplink transmission in the case that the validity duration of the location information of the terminal expires.

In some embodiments, the second information is used to compensate for a transmission delay of the uplink transmission of the terminal in the case that the validity duration of the location information of the terminal expires.

In some embodiments, the second information is used to determine an adjusted TA value.

It should be noted that, in the uplink transmission, the terminal needs to send an uplink signal a certain amount of time in advance relative to a downlink transmission in a certain time unit (exemplarily, the time unit may include but is not limited to a subframe, a time slot, a radio frame and/or an OFDM symbol, etc.) or a certain absolute time unit, that is, a TA, so that signals from all terminals within a cell arrive at a network side at the same time, and the transmission delay between the network device and the terminal is compensated, thereby aligning an uplink transmission unit and a downlink transmission unit at the network side in time.

It should be noted that in the NTN, a position between the terminal and the network device of the NTN changes dynamically. Consequently, second information for uplink transmissions of the terminal may differ at different moments. A change in the second information is primarily due to a change in a time length caused by a relative movement between the network device of the NTN and the terminal.

In some embodiments, first information is used to determine the validity duration of the location information of the terminal.

It can be understood that the terminal determines the validity duration of the location information of the terminal based on the first information, and determines whether the second information needs to be determined based on whether the validity duration of the location information of the terminal expires. It should be noted that if the validity duration of the location information of the terminal does not expire, the terminal can maintain the synchronization between the terminal and the network device of the NTN at this time, and the terminal may not determine the second information.

In some embodiments, the location information of the terminal may be location information obtained by the terminal when performing a global navigation satellite system (GNSS) measurement.

In some embodiments, the validity duration of the location information may be preconfigured by the GNSS. For example, the terminal may obtain the validity duration of the location information from a global positioning system (GPS) module.

In other embodiments, the validity duration of the location information may be notified, by the network device of the NTN, to the terminal through system information or a signaling.

It should be noted that the terminal needs to obtain the location information to determine the timing compensation of the uplink transmission based on the location information. However, due to the movement of the network device of the NTN and/or the terminal, the location information obtained by the terminal based on the GNSS measurement has a certain validity duration (a GNSS validity duration), that is, validity of the location information can only be maintained for a period of time. After the validity duration, the location information of the terminal is invalid and the terminal will enter an idle state. It can be understood that when the validity duration of the location information of the terminal expires, the second information of the uplink transmission of the terminal will also need to be adjusted.

The terminal needs to re-perform a GNSS measurement, but re-performing the GNSS measurement by a terminal in the idle state will introduce a data transmission delay and increase energy consumption.

In some embodiments, the first information may indicate at least one of: a first location of the terminal or a validity duration of the first location.

In some embodiments, the first location may be used at least to determine a timing advance amount of the uplink transmission of the terminal within a validity duration of the first information.

In some embodiments, the network device of the NTN determines the third information based on the uplink transmission of the terminal.

It should be noted that the network device of the NTN may determine the third information based on an arrival status of an uplink signal and/or uplink data sent by the terminal.

In some embodiments, the terminal receives configuration information sent by the network device of the NTN, and performs the uplink transmission based on the transmission resources indicated by the configuration information. The uplink transmission is used for the network device of the NTN to determine the third information.

In some embodiments, the configuration information indicates at least one of: an uplink signal, uplink data, or a transmission resource configured for the uplink signal or the uplink data.

In step 2102, the network device of the NTN sends the third information to the terminal.

In some embodiments, in a case that the location information of the terminal exceeds the validity duration, or the validity duration of the location information of the terminal expires, the network device of the NTN sends the third information to the terminal.

In some embodiments, in a case that the location information of the terminal does not exceed the validity duration, the network device of the NTN sends the third information to the terminal.

It should be noted that a timing for the network device of the NTN to send the third information to the terminal may be after or before the location information of the terminal exceeds the validity duration, that is, within the validity duration of the location information of the terminal.

In some embodiments, the terminal receives the third information sent by the network device.

In some embodiments, in the case that the location information of the terminal exceeds the validity duration, the terminal receives the third information sent by the network device.

In some embodiments, in the case that the location information of the terminal does not exceed the validity duration, the terminal receives the third information sent by the network device. The third information is used for the terminal to determine the second information in the case that the validity duration of the location information of the terminal expires.

It should be noted that, in the case that the validity duration of the location information of the terminal does not expire, the terminal may also receive the third information sent by the network device of the NTN. At this time, since the location information of the terminal is valid, the terminal can maintain the synchronization between the terminal and the network device of the NTN without using the third information to determine the second information. In the case that the validity duration of the location information of the terminal expires, the terminal may determine the second information based on third information received in advance to continue to maintain the synchronization between the terminal and the network device of the NTN.

In some embodiments, the third information may be carried in a radio resource control (RRC) layer signaling.

Alternatively, the third information may be carried in a control element (CE) of a media access control (MAC).

Alternatively, the third information may be carried in a physical layer signaling.

In some embodiments, the RRC layer signaling may be a downlink RRC layer signaling, such as an RRC connection release message or RRC configuration information.

In some embodiments, the physical layer signaling may include downlink control information (DCI).

In some embodiments, the RRC layer signaling, MAC CE or physical layer signaling may be used to add a new information field to specifically carry the third information.

It can be understood that an existing information field may be modified through the RRC layer signaling, MAC CE or physical layer signaling, so that the third information may be carried in the existing information field without adding the new information field, thereby reducing signaling overhead.

Exemplarily, the third information may be carried in a reserved bit of the existing information field.

As another example, the third information may multiplex the existing information fields of the RRC layer signaling, the MAC CE or the physical layer signaling with other information.

In some embodiments, the third information is carried in a timing advance command (TAC). The TAC may be carried in the MAC CE and sent to the terminal by the network device through a random access response (RAR) or message B (MSG B). Alternatively, the TAC may also be sent to the terminal by the network device through a MAC CE bearer after the terminal establishes an RRC connection, so that the terminal can adjust the TA value for a better synchronization with the network device.

It can be understood that the network device of the NTN may directly send a TAC including the third information to the terminal.

In some embodiments, the network device of the NTN sends fourth information to the terminal.

In some embodiments, the fourth information indicates one or more candidate TA drift rates configured for the terminal.

It can be understood that the network device of the NTN may pre-configure the one or more candidate TA drift rates, that is, a TA drift rate set, for the terminal, and inform the terminal of a pre-configured TA drift rate set by sending the fourth information to the terminal.

In some embodiments, the TAC is used to determine, from the one or more candidate TA drift rates, a TA drift rate included in the second information.

It should be noted that the TAC may include one or more indication bits, and different values of the indication bits correspond to different index numbers of the candidate TA drift rates. The terminal may determine a bit value of an indication bit in the TAC to determine a candidate TA drift rate corresponding to the bit value, and determine the candidate TA drift rate as the TA drift rate included in the second information.

In some embodiments, an information field may be added to the TAC to carry the one or more indication bits. The information field may include one or more octets.

In some other embodiments, the indication bit may be a reserved bit of the TAC. It can be understood that the reserved bit of the TAC is directly used without changing a structure of the TAC. The different index numbers of the candidate TA drift rates are indicated by different bit values of the reserved bit. In some other embodiments, the fourth information may be the configuration information.

Here, the configuration information is used to configure a resource for the uplink transmission and related information of a timing advance corresponding to the uplink transmission.

In some embodiments, the third information may be carried in the configuration information.

In some embodiments, the network device of the NTN sends a RRC layer signaling including the fourth information to the terminal.

Alternatively, the network device of the NTN sends a CE of the MAC including the fourth information to the terminal.

Alternatively, the network device of the NTN sends a physical layer signaling including the fourth information to the terminal.

In some embodiments, the RRC layer signaling may be the downlink RRC layer signaling, such as the RRC connection release message or the RRC configuration information.

In some embodiments, the physical layer signaling may include the DCI.

In some embodiments, the RRC layer signaling, MAC CE or physical layer signaling may add a new information field to specifically carry the fourth information.

It can be understood that the RRC layer signaling, MAC CE or physical layer signaling may be modified to add the information field to carry the fourth information in the information field, thereby reducing the signaling overhead.

In some other embodiments, the RRC layer signaling, MAC CE or physical layer signaling may include one or more reserved information fields. The fourth information is carried through a reserved information field.

It can be understood that the fourth information may be directly carried in the existing information field of the RRC layer signaling, MAC CE or physical layer signaling, which can reduce the signaling overhead on one hand and does not require to modify the signaling on the other hand.

In step 2103, the terminal determines the second information.

In some embodiments, the terminal determines the second information based on the first information.

It can be understood that the terminal determines the validity duration of the location information of terminal based on the first information, and determines whether the second information needs to be determined based on whether the validity duration of the location information of terminal expires. It should be noted that if the validity duration of the location information of the terminal does not expire, the terminal can maintain the synchronization between the terminal and the network device of the NTN at this time, and the terminal may not determine the second information.

In some embodiments, in the case that the validity duration of the location information of the terminal expires, the terminal determines the second information.

In some embodiments, the terminal may determine the second information based on the third information sent by the network device of the NTN.

In some embodiments, the second information may include at least one of: the TA drift rate; or the TA adjustment amount.

It can be understood that the terminal may directly determine a TA drift rate and/or TA adjustment amount in the third information as the TA drift rate and/or TA adjustment amount included in the second information.

In step 2104, the terminal maintains the synchronization between the terminal and the network device of NTN.

In some embodiments, the terminal maintains the synchronization between the terminal and the network device of NTN based on the second information.

In some embodiments, the terminal may determine a timing advance value for the uplink transmission based on the second information.

It can be understood that the terminal may achieve the synchronization between the terminal and the network device of NTN based on the timing advance value for the uplink transmission configured by the network device.

In some embodiments, determining the timing advance value for the uplink transmission based on the second information including: determining a TA adjustment amount for a time unit based on the second information; and adjusting a TA value of a corresponding time unit based on the TA adjustment amount.

It can be understood that the time unit may be a time unit corresponding to the uplink transmission.

In some embodiments, the time unit may include: a symbol, a mini-slot, or a time slot.

It should be noted that adjusting the TA value of the corresponding time unit based on the TA adjustment amount may be understood as adjusting a TA value of a last uplink transmission of the terminal based on the TA adjustment amount to obtain a TA value of the uplink transmission of the terminal in the case that the validity duration of the location information of the terminal expires.

In some embodiments, the terminal may determine an interval period between a current uplink transmission and the last uplink transmission, determine a TA adjustment amount of the current uplink transmission based on a TA drift rate and the interval period, and adjust a TA value of the current uplink transmission based on the TA adjustment amount.

In some embodiments, a term "information" may be used interchangeably with terms such as "message", "signal", "signaling", "report", "configuration", "indication", "instruction", "command", "channel", "parameter", "field", and "data".

In some embodiments, a term "send" may be used interchangeably with terms such as "transmit", "report", and "transport".

The information processing method involved in the embodiments of the present disclosure may include at least one of step 2101 to step 2104. For example, a combination of step 2103 and step 2104 may be implemented as an independent embodiment, but is not limited thereto.

In some embodiments, step 2101 and step 2102 are optional, and one or more of these steps may be omitted or replaced in different embodiments. It can be understood that the terminal may determine the second information by itself based on ephemeris information, without needing the network device to determine and send the third information.

In some embodiments, step 2101, step 2102, and step 2103 are optional, and one or more of these steps may be omitted or replaced in different embodiments. It can be understood that, in the case that the validity duration of the location information of the terminal does not expire, the terminal may directly maintain the synchronization between the terminal and the network device of the NTN based on GNSS information.

FIG. 2b is an interaction schematic diagram illustrating an information processing method according to an exemplary embodiment. As shown in FIG. 2b, the embodiments of the present disclosure relate to an information processing method, which is performed by a communication system 100, and the method includes the following steps.

In step 2201, a terminal determines second information.

In some embodiments, the terminal determines the second information based on first information.

In some embodiments, the first information is used to determine a validity duration of location information of the terminal.

It can be understood that the terminal determines the validity duration of the location information of terminal based on the first information, and determines whether the second information needs to be determined based on whether the validity duration of the location information of terminal expires. It should be noted that if the validity duration of the location information of the terminal does not expire, the terminal can maintain a synchronization between the terminal and a network device of a non-terrestrial network (NTN) at this time, and the terminal may not determine the second information.

In some embodiments, in a case that the validity duration of the location information of the terminal expires, the terminal determines the second information.

In some embodiments, the location information of the terminal may be location information obtained by the terminal when performing a global navigation satellite system (GNSS) measurement.

In some embodiments, the validity duration of the location information may be preconfigured by a GNSS. For example, the terminal may obtain the validity duration of the location information from a global positioning system (GPS) module.

In other embodiments, the validity duration of the location information may be notified, by the network device of the NTN, to the terminal through system information or a signaling.

It should be noted that the terminal needs to obtain the location information to determine a timing compensation of an uplink transmission based on the location information. However, due to a movement of the network device of the NTN and/or the terminal, the location information obtained by the terminal based on the GNSS measurement has a certain validity duration (a GNSS validity duration), that is, validity of the location information can only be maintained for a period of time. After the validity duration, the location information of the terminal is invalid and the terminal will enter an idle state. It can be understood that in a case that the first information expires, that is, the validity duration of the location information of the terminal expires, second information of the uplink transmission of the terminal will also need to be adjusted.

The terminal needs to re-perform a GNSS measurement, but re-performing the GNSS measurement by a terminal in the idle state will introduce a data transmission delay and increase energy consumption.

In some embodiments, the second information is used to maintain the synchronization between the terminal and the network device of the NTN in the case that the validity duration of the location information of the terminal expires.

In some embodiments, the second information is used for the terminal to perform the uplink transmission in the case that the validity duration of the location information of the terminal expires.

In some embodiments, the second information is used to compensate for a transmission delay of the uplink transmission of the terminal in the case that the validity duration of the location information of the terminal expires.

It should be noted that, in the uplink transmission, the terminal needs to send uplink signals with a certain amount of time in advance relative to a downlink transmission in a certain time unit (exemplarily, the time unit may include but is not limited to a subframe, a time slot, a radio frame and/or an OFDM symbol, etc.) or in a certain absolute time unit, that is, a timing advance (TA), so that signals from all terminals within a cell arrive at a network side at the same time, and a transmission delay between the network device and the terminal is compensated, thereby aligning an uplink transmission unit and a downlink transmission unit at the network side in time.

It should be noted that in the NTN, a position between the terminal and the network device of the NTN changes dynamically. Consequently, second information for uplink transmissions of the terminal may differ at different moments. A change in the second information is primarily due to a change in a time length caused by a relative movement between the network device of the NTN and the terminal.

In some embodiments, the first information may indicate at least one of: a first location of the terminal or a validity duration of the first location.

In some embodiments, the first location may be used at least to determine a timing advance amount of the uplink transmission of the terminal within a validity duration of the first information.

In some embodiments, determining the second information based on the first information may include: determining fifth information, where the fifth information is used to determine a second location of the terminal; and determining a TA drift rate included in the second information based on a first location determined from the first information and the second location.

It should be noted that the second location may be a current location of the terminal.

In some embodiments, the terminal may determine an amount of change in relative positions between the terminal and the network device of the NTN after the validity duration of the location information of the terminal expires based on the first location and the second location, and determine the TA drift rate included in the second information based on the amount of the change in the relative positions.

It can be understood that the change in the relative positions between the terminal and the network device of the NTN may be understood as an amount of change in the relative positions between the terminal and the network device of the NTN during an interval period between the a current uplink transmission and the last uplink transmission of the terminal.

In some embodiments, determining the fifth information may include: obtaining sixth information; and determining the fifth information based on the sixth information.

In some embodiments, the sixth information is used to determine a movement status of the network device of the NTN.

In some embodiments, the sixth information may be ephemeris information.

In some embodiments, the ephemeris information is used to compensate for a transmission delay and/or frequency offset between the terminal and the network device of the NTN.

In some embodiments, the ephemeris information may be sent by a base station to a user equipment (UE).

In some embodiments, the ephemeris information may be information related to a position and/or velocity of a satellite.

In some embodiments, the ephemeris information may include at least one of: satellite coordinates, a satellite orbital altitude, location information of a sub-satellite point, a satellite orbital plane inclination angle; right ascension of an ascending node, a length of a semi-major axis of a satellite orbit, or an elliptical eccentricity of the satellite orbit.

In step 2202, the terminal maintains the synchronization between the terminal and the network device of NTN.

In some embodiments, the terminal maintains the synchronization between the terminal and the network device of NTN based on the second information.

In some embodiments, the terminal may determine a timing advance value for the uplink transmission based on the second information.

It can be understood that the terminal may achieve the synchronization between the terminal and the network device of NTN based on the timing advance value for the uplink transmission configured by the network device.

In some embodiments, determining the timing advance value for the uplink transmission based on the second information including: determining a TA adjustment amount for a time unit based on the second information; and adjusting a TA value of a corresponding time unit based on the TA adjustment amount.

It can be understood that the time unit may be a time unit corresponding to the uplink transmission.

In some embodiments, the time unit may include: a symbol, a mini-slot, or a time slot.

It should be noted that adjusting the TA value of the corresponding time unit based on the TA adjustment amount may be understood as adjusting a TA value of a last uplink transmission of the terminal based on the TA adjustment amount to obtain a TA value of the uplink transmission of the terminal in the case that the validity duration of the location information of the terminal expires.

In some embodiments, the terminal may determine the interval period between the current uplink transmission and the last uplink transmission, determine a TA adjustment amount of the current uplink transmission based on a TA drift rate and the interval period, and adjust a TA value of the current uplink transmission based on the TA adjustment amount.

The information processing method involved in the embodiments of the present disclosure may include at least one of step 2201 to step 2202. For example, step 2202 may be implemented as an independent embodiment, but is not limited thereto.

In some embodiments, step 2201 is optional, and one or more of these steps may be omitted or replaced in different embodiments. It can be understood that, in the case that the validity duration of the location information of the terminal does not expire, the terminal may directly maintain the synchronization between the terminal and the network device of the NTN based on GNSS information.

FIG. 3a is a flow chart illustrating an information processing method according to an exemplary embodiment. As shown in FIG. 3a, embodiments of the present disclosure relate to an information processing method, which is performed by a terminal 101, and the method includes the following steps.

In step 3101, a terminal receives third information sent by a network device of a non-terrestrial network (NTN).

In some embodiments, an optional implementation of step 3101 may refer to an optional implementation of step 2102 in FIG. 2a and other related parts of the embodiment involved in FIG. 2a, and will not be repeated here.

In step 3102, the terminal determines second information.

In some embodiments, an optional implementation of step 3102 may refer to an optional implementation of step 2103 in FIG. 2a and other related parts of the embodiment involved in FIG. 2a, and will not be repeated here.

In step 3103, the terminal maintains a synchronization between the terminal and the network device of the NTN.

In some embodiments, an optional implementation of step 3102 may refer to an optional implementation of step 2104 in FIG. 2a and other related parts of the embodiment involved in FIG. 2a, and will not be repeated here.

The information processing method involved in the embodiments of the present disclosure may include at least one of step 3101 to step 3103. For example, step 3103 may be implemented as an independent embodiment. For example, a combination of step 3102 and step 3103 may be implemented as an independent embodiment, but is not limited thereto.

In some embodiments, step 3101 is optional, and one or more of these steps may be omitted or replaced in different embodiments. It can be understood that the terminal may determine the second information by itself based on ephemeris information, without needing the network device to determine and send the third information.

In some embodiments, step 3101 and step 3102 are optional, and one or more of these steps may be omitted or replaced in different embodiments. It can be understood that, in a case that a validity duration of location information of the terminal does not expire, the terminal may directly maintain the synchronization between the terminal and the network device of the NTN based on GNSS information.

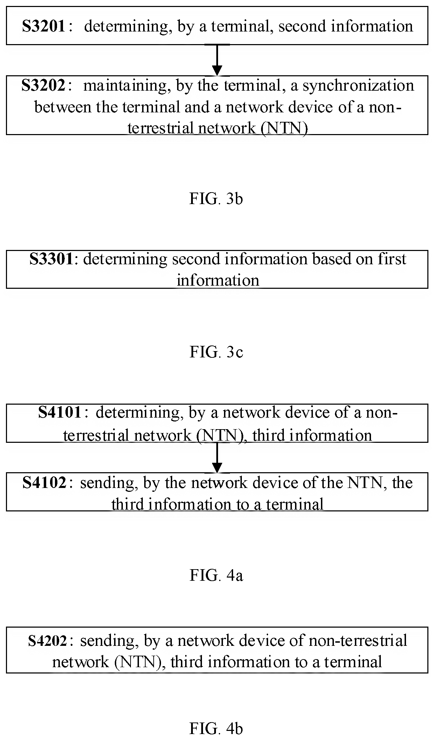

FIG. 3b is a flow chart illustrating an information processing method according to an exemplary embodiment. As shown in FIG. 3b, embodiments of the present disclosure relate to an information processing method, which is performed by a terminal 101, and the method includes the following steps.

In step 3201, a terminal determines second information.

In some embodiments, an optional implementation of step 3201 may refer to an optional implementation of step 2102 in FIG. 2b and other related parts of the embodiment involved in FIG. 2b, and will not be repeated here.

In step 3202, the terminal maintains a synchronization between the terminal and a network device of a non-terrestrial network (NTN).

In some embodiments, an optional implementation of step 3202 may refer to an optional implementation of step 2102 in FIG. 2b and other related parts of the embodiment involved in FIG. 2b, and will not be repeated here.

The information processing method involved in the embodiments of the present disclosure may include at least one of step 3201 to step 3202. For example, step 3202 may be implemented as an independent embodiment, but is not limited thereto.

In some embodiments, step 3101 is optional, and one or more of these steps may be omitted or replaced in different embodiments. It can be understood that, in a case that a validity duration of location information of the terminal does not expire, the terminal may directly maintain the synchronization between the terminal and the network device of the NTN based on GNSS information.

FIG. 3c is a flow chart illustrating an information processing method according to an exemplary embodiment. As shown in FIG. 3c, embodiments of the present disclosure relate to an information processing method, which is performed by a terminal 101, and the method includes the following steps.

In step 3301, second information is determined based on first information.

In some embodiments, the first information is used to determine a validity duration of location information of a terminal.

In some embodiments, the second information is used to maintain a synchronization between the terminal and a network device of a non-terrestrial network (NTN) in a case that the validity duration of the location information of the terminal expires

In some embodiments, the method further includes: receiving third information from the network device, where the third information is used for the terminal to determine the second information.

In some embodiments, the third information includes at least one of: a timing advance (TA) drift rate; or a timing advance adjustment amount.

In some embodiments, the third information is carried in a timing advance command (TAC).

In some embodiments, the method further includes: receiving fourth information, where the fourth information indicates one or more candidate TA drift rates configured for the terminal, and the TAC is used to determine, from the one or more candidate TA drift rates, a TA drift rate included in the second information.

In some embodiments, determining the second information based on the first information includes: determining fifth information, where the fifth information is used to determine a second location of the terminal; and determining the TA drift rate included in the second information based on a first location determined from the first information and the second location.

In some embodiments, determining the fifth information includes: obtaining sixth information, where the sixth information is used to determine a movement status of the network device of the NTN; and determining the fifth information based on the sixth information.

In some embodiments, the method further includes: in a case that the second information is a TA drift rate, determining a TA adjustment amount for a time unit based on the TA drift rate; and adjusting a TA value of a corresponding time unit based on the TA adjustment amount.

In some embodiments, the method further includes: in a case that the second information is a TA adjustment amount, adjusting a TA value of a corresponding time unit based on the TA adjustment amount.

FIG. 4a is a flow chart illustrating an information processing method according to an exemplary embodiment. As shown in FIG. 4a, embodiments of the present disclosure relate to an information processing method, which is performed by a network device 102, and the method includes the following steps.

In step 4101, a network device of a non-terrestrial network (NTN) determines third information.

In some embodiments, an optional implementation of step 4101 may refer to an optional implementation of step 2101 in FIG. 2a and other related parts of the embodiment involved in FIG. 2a, and will not be repeated here.

In step 4102, the network device of the NTN sends the third information to a terminal.

In some embodiments, an optional implementation of step 4102 may refer to an optional implementation of step 2102 in FIG. 2a and other related parts of the embodiment involved in FIG. 2a, and will not be repeated here.

The information processing method involved in the embodiments of the present disclosure may include at least one of step 4101 to step 4102. For example, step 4101 may be implemented as an independent embodiment, but is not limited thereto.

In some embodiments, step 4101 and step 4102 are optional, and one or more of these steps may be omitted or replaced in different embodiments. It can be understood that the terminal can determine second information by itself based on ephemeris information, without needing the network device to send the third information.

FIG. 4b is a flow chart illustrating an information processing method according to an exemplary embodiment. As shown in FIG. 4b, embodiments of the present disclosure relate to an information processing method, which is performed by a network device 102, and the method includes the following steps.

In step 4201, a network device of a non-terrestrial network (NTN) sends third information to a terminal.

In some embodiments, the third information is used for the terminal to determine second information.

In some embodiments, the second information is used to maintain a synchronization between the terminal and the network device of the NTN in a case that a validity duration of location information of the terminal expires

In some embodiments, the third information includes at least one of: a timing advance (TA) drift rate; or a timing advance adjustment amount.

In some embodiments, the third information is carried in a timing advance command (TAC).

In some embodiments, the method further includes: sending fourth information, where the fourth information indicates one or more candidate TA drift rates configured for the terminal, and the TAC is used to determine, from the one or more candidate TA drift rates, a TA drift rate included in the second information.

In some embodiments, the method further includes: determining the third information based on an uplink transmission of the terminal.

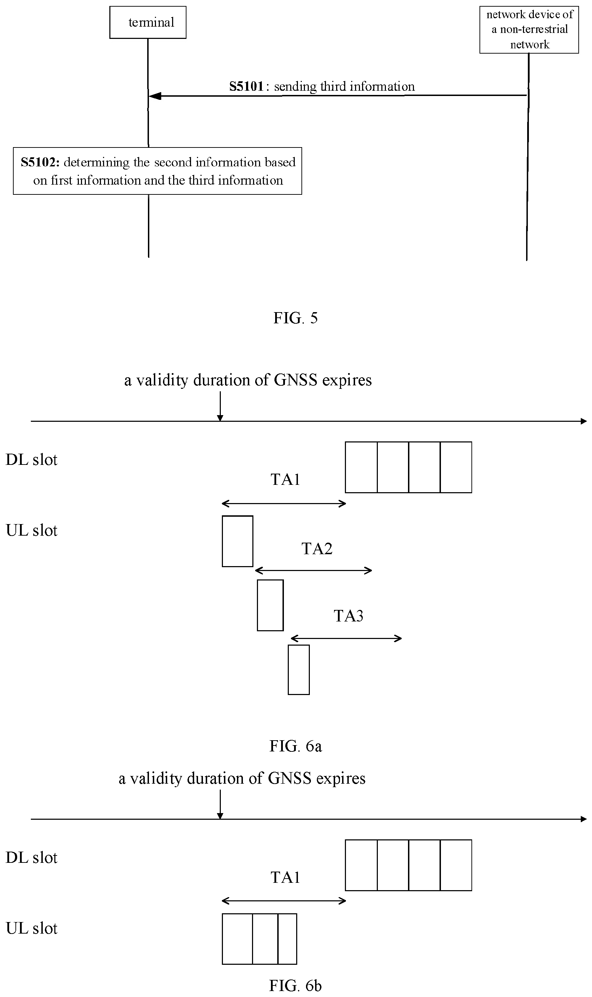

FIG. 5 is an interaction schematic diagram illustrating an information processing method according to an exemplary embodiment. As shown in FIG. 5, embodiments of the present disclosure relate to an information processing method, which is performed by a communication system 100, and the method includes at least one of the following steps.

In step 5101, a network device sends third information to a terminal.

In some embodiments, the network device is a network device of a non-terrestrial network (NTN).

In some embodiments, the third information is used for the terminal to determine second information.

In step 5102, the terminal determines the second information based on first information and the third information.

In some embodiments, the first information is used to determine a validity duration of location information of the terminal.

In some embodiments, the second information is used to maintain a synchronization between the terminal and the network device of the NTN in a case that the validity duration of the location information of the terminal expires.

In some embodiments, the above methods may include the methods described in the embodiments of the above communication system side, terminal side, access network device side, core network device side, etc., and will not be repeated here.

In a case that existing GNSS information of the terminal expires, that is, in a case that a validity duration of a GNSS (a GNSS validity duration) expires, the terminal maintains its uplink transmission.

It should be noted that the validity duration of the GNSS corresponds to the first information disclosed in the present disclosure.

The terminal determines that the terminal can maintain time information of its uplink transmission, in a case that the existing GNSS information of the terminal expires. Within the indicated by the time information, the terminal performs an uplink synchronization in the following ways.

In solution 1, the terminal receives a higher layer signaling sent by a base station, such as RRC signaling, MAC CE or physical layer signaling, to determine configuration information, and the configuration information includes indication information of a timing advance (TA) drift rate.

In some embodiments, the configuration information may correspond to fourth information of the present disclosure.

Exemplarily, the TA drift rate may be sent to the terminal via a timing advance command (TAC).

For example, the terminal receives the configuration information sent by the base station to determine a set of TA drift rates, and the terminal determines a TA drift rate within the time information, based on the TAC.

It should be noted that the base station may determine a TA drift rate of the terminal based on a reception of an uplink signal.

Exemplarily, the terminal may receive the configuration information of the base station and determine a required transmission of the uplink signal or uplink data. The base station determines the TA drift rate of the terminal based on an arrival status of the uplink signal or the uplink data.

As shown in FIG. 6a, FIG. 6a is a schematic diagram illustrating an adjustment of a timing advance (TA) value of an uplink transmission of a terminal based on a TA drift rate according to an exemplary embodiment. The terminal adjusts a TA value of each uplink transmission unit of the terminal based on the TA drift rate.

It should be noted that the uplink transmission unit corresponds to a time unit of the present disclosure.

In solution 2, the terminal receives a higher layer signaling sent by a base station, such as RRC signaling, MAC CE or physical layer signaling, to determine configuration information, and the configuration information includes indication information of a timing advance command (TAC).

As shown in FIG. 6b, FIG. 6b is a schematic diagram illustrating an adjustment of a timing advance (TA) value of an uplink transmission of a terminal based on a TA adjustment amount indicated by a timing advance command (TAC) according to an exemplary embodiment. The terminal determines a TA value of the terminal based on existing GNSS information.

In solution 3, the terminal determines a TA drift rate.

Exemplarily, the terminal determines its TA drift rate based on ephemeris information and existing GNSS information of the terminal.

In some embodiments, the ephemeris information corresponds to sixth information of the present disclosure.

The terminal adjusts its TA value in each uplink transmission unit (slot) based on the TA drift rate.

The embodiments of the present disclosure also provide an apparatus for implementing any of the above methods. For example, an apparatus is provided, and the above apparatus includes a unit or module for implementing each step performed by the terminal in any of the above methods. For another example, another apparatus is also provided, including a unit or module for implementing each step performed by a network device (such as an access network device or a core network device, etc.) in any of the above methods.

It should be understood that a division of the unit or module in the above apparatus is only a division of logical functions, and in actual implementation, they may be fully or partially integrated into one physical entity, or they may be physically separated. In addition, the unit or module in the apparatus may be implemented in the form of a processor calling software. For example, the apparatus includes a processor, the processor is connected to a memory, and instructions are stored in the memory. The processor calls the instructions stored in the memory to implement any of the methods or implement a function of the unit or module of the apparatus. The processor is, for example, a general-purpose processor, such as a central processing unit (CPU) or a microprocessor, and the memory is a memory inside the apparatus or a memory outside the apparatus. Alternatively, the unit or module in the apparatus may be implemented in the form of a hardware circuit, and the hardware circuit is designed to implement a function of some or all of the units or modules. The hardware circuit may be understood as one or more processors. For example, in an implementation, the hardware circuit is an application-specific integrated circuit (ASIC), and the functions of some or all of the units or modules are implemented by designing a logical relationship of components in the circuit. For example, in another implementation, the hardware circuit may be implemented by a programmable logic device (PLD). Taking a field programmable gate array (FPGA) as an example, which may include a large number of logic gate circuits, and a connection relationship between the logic gate circuits is configured by a configuration file, so as to implement the functions of some or all of the units or modules. All of the units or modules of the apparatus may be implemented in the form of a processor calling software, or in the form of a hardware circuit, or in part by the processor calling software and the rest by the hardware circuit.

In the embodiments of the present disclosure, the processor is a circuit with a signal processing capability. In an implementation, the processor may be a circuit with an instruction reading and an execution capability, such as a central processing unit (CPU), a microprocessor, a graphics processing unit (GPU) (which may be understood as a microprocessor), or a digital signal processor (DSP). In another implementation, the processor may implement certain functions through a logical relationship of the hardware circuit, and the logical relationship of the hardware circuit may be fixed or reconfigurable, such as a hardware circuit implemented by the application-specific integrated circuit (ASIC) or the programmable logic device (PLD), such as the FPGA. In a reconfigurable hardware circuit, a process of the processor loading a configuration document to implement a hardware circuit configuration may be understood as a process of the processor loading instructions to implement the functions of some or all of the units or modules. In addition, it may also be a hardware circuit designed for artificial intelligence, which may be understood as ASIC, such as a neural network processing unit (NPU), a tensor processing unit (TPU), a deep learning processing unit (DPU), etc.

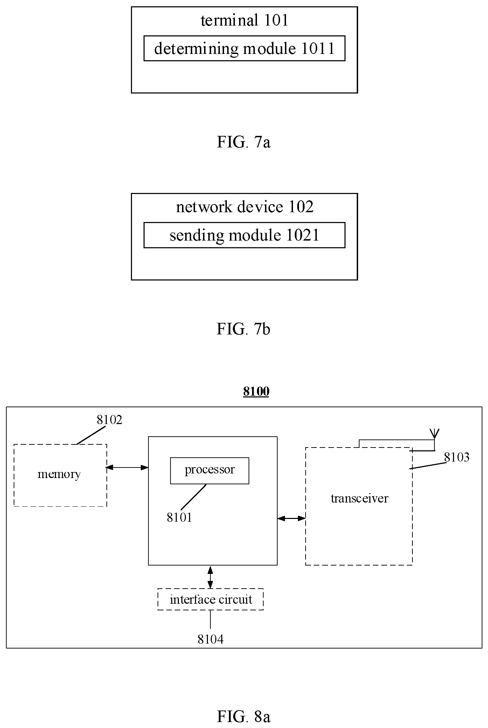

FIG. 7a is a block diagram illustrating a terminal according to an exemplary embodiment. As shown in Fig. 7a, a terminal 101 includes a determining module 1011 configured to determine second information based on first information, where the first information is used to determine a validity duration of location information of the terminal, and the second information is used to maintain a synchronization between the terminal and a network device of a non-terrestrial network (NTN) in a case that the location information of the terminal exceeds the validity duration. Optionally, the determining module 1011 is configured to perform steps related to an information reception and determination performed by the terminal in any of the above information processing methods, and will not be repeated here. Optionally, the terminal 101 further includes a sending module. The sending module is configured to perform steps related to sending performed by the terminal in any of the above methods, and will not be repeated here.

FIG. 7b is a block diagram illustrating a network device according to an exemplary embodiment. As shown in FIG. 7b, a network device 102 includes: a second sending module 1021, configured to send third information to a terminal; where the third information is used for the terminal to determine second information, and the second information is used to maintain a synchronization between the terminal and a network device of a non-terrestrial network (NTN) in a case that location information of the terminal exceeds a validity duration. Optionally, the second sending module 1021 is configured to perform steps related to information sending and receiving performed by the terminal in any of the above information processing methods, and will not be repeated here. Optionally, the network device 102 further includes a determining module, and the determining module is configured to perform steps related to determining performed by the terminal in any of the above methods, and will not be repeated here.

FIG. 8a is a block diagram illustrating a communication device 8100 according to an exemplary embodiment. The communication device 8100 may be a network device (e.g., an access network device or a core network device, etc.), or a terminal (e.g., a user device, etc.), or a chip, a chip system or a processor that supports the network device to implement any of the above methods, or a chip, a chip system or a processor that supports the terminal to implement any of the above information processing methods. The communication device 8100 may be configured to implement the information processing method described in the above method embodiments, and the details may refer to the descriptions in the above method embodiments.

As shown in FIG. 8a, the communication device 8100 includes one or more processors 8101. A processor 8101 may be a general-purpose processor or a dedicated processor, for example, a baseband processor or a central processing unit. The baseband processor may be used to process a communication protocol and communication data. The central processing unit may be configured to control a communication device (such as a base station, a baseband chip, a terminal device, a terminal device chip, a DU or a CU, etc.), execute programs, and process data of the programs. The processor 8101 is configured to call instructions to cause the communication device 8100 to perform any of the above communication methods.

In some embodiments, the communication device 8100 further includes one or more memories 8102 for storing instructions. Optionally, all or part of the one or more memories 8102 may also be located outside the communication device 8100.

In some embodiments, the communication device 8100 further includes one or more transceivers 8103. When the communication device 8100 includes the one or more transceivers 8103, communication steps such as sending and receiving in the above method are performed by the one or more transceivers 8103, and other steps are performed by the processor 8101.

In some embodiments, the transceiver may include a receiver and/or a transmitter. The receiver and the transmitter may be separate or integrated. Optionally, terms such as transceiver, transceiver unit, transceiver circuit, etc. may be used interchangeably, terms such as transmission unit, transmitter, transmission circuit, etc. may be used interchangeably, and terms such as receiver, receiving unit, receiving circuit, etc. may be used interchangeably.

Optionally, the communication device 8100 further includes one or more interface circuits 8104, which are connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 described in the above embodiments may be the network device or the terminal, but the scope of the communication device 8100 described in the present disclosure is not limited thereto, and a structure of the communication device 8100 may not be limited by FIG. 8a. The communication device may be an independent device or may be part of a larger device. For example, the communication device may be: (1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

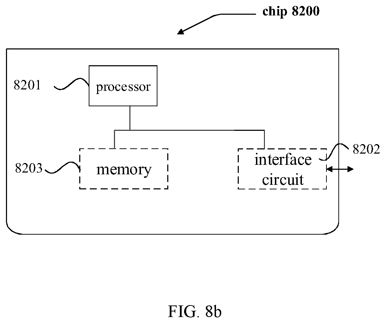

FIG. 8b is a block diagram illustrating a chip 8200 according to an exemplary embodiment. In a case that the communication device 8100 may be a chip or a chip system, reference may be made to the block diagram of the chip 8200 shown in Fig. 8b, but not limited thereto.

The chip 8200 includes one or more processors 8201, and one or more processors 8201 are configured to call instructions to cause the chip 8200 to perform any of the above communication methods.

In some embodiments, the chip 8200 further includes one or more interface circuits 8202, which are connected to a memory 8203. The interface circuit 8202 may be configured to receive signals from the memory 8203 or other devices. The interface circuit 8202 may be configured to send signals to the memory 8203 or other devices. For example, the interface circuit 8202 may read instructions stored in the memory 8203 and send the instructions to the processor 8201. Optionally, terms such as interface circuit, interface, transceiver pin, and transceiver may be used interchangeably.

In some embodiments, the chip 8200 further includes one or more memories 8203 for storing instructions. Optionally, all or part of one or more memories 8203 may be located outside the chip 8200.

The present disclosure also provides a storage medium for storing instructions that, when the instructions are executed on the communication device 8100, cause the communication device 8100 to perform any of the above methods. Optionally, the storage medium is an electronic storage medium. Optionally, the storage medium is a computer-readable storage medium, but it may also be a storage medium readable by other devices. Optionally, the storage medium may be a non-transitory storage medium, but it may also be a temporary storage medium.

The present disclosure also provides a program product, and when the program product is executed by the communication device 8100, the communication device 8100 performs any one of the above communication methods. Optionally, the program product is a computer program product.

The present disclosure also provides a computer program, which, when executed on a computer, cause the computer to perform any one of the above communication methods.

Those skilled in the art will readily appreciate other implementations of the present invention after considering the specification and practicing the invention disclosed herein. The present disclosure is intended to cover any variations, uses or adaptations of the present invention that follow the general principles of the present invention and include common knowledge or customary techniques in the art that are not disclosed in the present disclosure. The specification and examples are considered exemplary only, and the true scope and spirit of the present invention are indicated by the following claims.

It should be understood that the present invention is not limited to the exact construction that has been described above and shown in the drawings and that various modifications and changes may be made without departing from the scope thereof. The scope of the present invention is limited only by the appended claims.

## Claims

1. An information processing method, comprising:
determining second information based on first information, wherein the first information is used to determine a validity duration of location information of a terminal, and the second information is used to maintain a synchronization between the terminal and a network device of a non-terrestrial network (NTN) in a case that the validity duration of the location information of the terminal expires.

2. The method according to claim 1, further comprising:
receiving third information from the network device, wherein the third information is used for the terminal to determine the second information.

3. The method according to claim 2, wherein the third information comprises at least one of:
a timing advance (TA) drift rate; or
a timing advance adjustment amount.

4. The method according to claim 2 or 3, wherein the third information is carried in a timing advance command (TAC).

5. The method according to claim 4, further comprising:
receiving fourth information, wherein the fourth information indicates one or more candidate TA drift rates configured for the terminal;
wherein the TAC is used to determine, from the one or more candidate TA drift rates, a TA drift rate included in the second information.

6. The method according to claim 1, wherein determining the second information based on the first information comprises:
determining fifth information, wherein the fifth information is used to determine a second location of the terminal; and
determining a TA drift rate included in the second information based on a first location determined from the first information and the second location.

7. The method according to claim 6, wherein determining the fifth information comprises:
obtaining sixth information, wherein the sixth information is used to determine a movement status of the network device of the NTN; and
determining the fifth information based on the sixth information.

8. The method according to any one of claims 1 to 7, further comprising:
in a case that the second information is a TA drift rate, determining a TA adjustment amount for a time unit based on the TA drift rate; and
adjusting a TA value of a corresponding time unit based on the TA adjustment amount.

9. The method according to any one of claims 1 to 7, further comprising:
in a case that the second information is a TA adjustment amount, adjusting a TA value of a corresponding time unit based on the TA adjustment amount.

10. An information processing method, comprising:
sending, by a network device of a non-terrestrial network (NTN), third information to a terminal, wherein the third information is used for the terminal to determine second information, and the second information is used to maintain a synchronization between the terminal and the network device of the NTN in a case that a validity duration of location information of the terminal expires.

11. The method according to claim 10, wherein the third information comprises at least one of:
a timing advance (TA) drift rate; or
a timing advance adjustment amount.

12. The method according to claim 10 or 11, wherein the third information is carried in a timing advance command (TAC).

13. The method according to claim 12, further comprising:
sending fourth information, wherein the fourth information indicates one or more candidate TA drift rates configured for the terminal,
wherein the TAC is used to determine, from the one or more candidate TA drift rates, a TA drift rate included in the second information.

14. The method according to any one of claims 10 to 13, further comprising:
determining the third information based on an uplink transmission of the terminal.

15. An information processing method, comprising:
sending, by a network device of a non-terrestrial network (NTN), third information to a terminal, wherein the third information is used for the terminal to determine second information; and
determining, by the terminal, the second information, based on first information and the third information, wherein the first information is used to determine a validity duration of location information of the terminal, and the second information is used to maintain a synchronization between the terminal and the network device of the NTN in a case that the validity duration of the location information of the terminal expires.

16. A terminal, comprising:
a determining module, configured to determine second information based on first information, wherein the first information is used to determine a validity duration of location information of a terminal, and the second information is used to maintain a synchronization between the terminal and a network device of a non-terrestrial network (NTN) in a case that the validity duration of the location information of the terminal expires.

17. A network device, comprising:
a sending module, configured to send third information to a terminal, wherein the third information is used for the terminal to determine second information, and the second information is used to maintain a synchronization between the terminal and a network device of a non-terrestrial network (NTN) in a case that a validity duration of location information of the terminal expires.

18. A communication system, comprising a terminal and a network device, wherein the terminal is configured to implement the information processing method according to any one of claims 1 to 9, and the network device is configured to implement the information processing method according to any one of claims 10 to 14.

19. A communication device, comprising:
one or more processors;
wherein the one or more processors are configured to call instructions to cause the communication device to perform the information processing method according to any one of claims 1 to 9 or the information processing method according to any one of claims 10 to 14.

20. A storage medium for storing instructions that, when executed on a communication device, cause the communication device to implement the information processing method according to any one of claims 1 to 9 or the information processing method according to any one of claims 10 to 14.
